# EUROPÄISCHE PATENTSCHRIFT

(11) **EP 2 165 868 B1**
(45) Veröffentlichungstag und Bekanntmachung des Hinweises auf die Patenterteilung: **05.01.2011**
(21) Anmeldenummer: 08164832.1
(22) Anmeldetag: 22.09.2008
(51) Int. Cl.: B60J 5/06, E05D 15/10, B61D 19/00

(54) **Schwenkschiebetürsystem**
Swinging door system
Système de porte coulissante pivotante

(43) Veröffentlichungstag der Anmeldung: 24.03.2010
(73) Patentinhaber: TER GmbH Komponenten für Aufzüge und Verkehrsmittel, 42551 Velbert (DE)
(72) Erfinder: Goldbach, Horst, 40883 Ratingen (DE)
(74) Vertreter: Viering, Jentschura & Partner

(56) Entgegenhaltungen:
- WO-A-2006/087132
- DE-A1- 19 946 501
- DE-U1-202005 015 166
- JP-A- 2008 190 199

## Beschreibung

Die Erfindung richtet sich auf ein Schwenkschiebetürsystem eines Fahrzeugs, insbesondere eines Personenbeförderungsfahrzeugs, das zumindest einen an einer horizontalen Tragstange einer Lagereinheit verschiebbar gelagerten Türflügel umfasst, der zum Öffnen aus einer Türöffnung ausfahrbar und in seiner Offenstellung an einer Außenwand des Fahrzeugs längs verschiebbar ist und in Bewegungsumkehr die Türöffnung wieder verschließt, wobei die Lagereinheit senkrecht zur Verschieberichtung des zumindest einen Türflügels aus- und einfahrbar ist und eine zur Tragstange parallele Riegelwelle, die über ein Koppelgetriebe die Lagereinheit aus- und einfährt, und einen elektrischen Getriebemotor aufweist, der mit der Riegelwelle verbunden ist und diese rotatorisch antreibt, und das eine Führungs- und Verriegelungsvorrichtung aufweist, die einen Schwenkhebel umfasst, der mit seinem einen Ende an dem zugeordneten mindestens einen Türflügel geführt und mit seinem anderen Ende an einem Verriegelungselement befestigt ist, das in einem am Türrahmen und/oder am Fahrzeugboden ortsfest angeordneten Führungs- und Verriegelungsteil verschwenkbar gelagert ist.

Weiterhin richtet sich die Erfindung auf ein Personenbeförderungsfahrzeug mit einem Schwenkschiebetürsystem, das zumindest einen an einer horizontalen Tragstange einer Lagereinheit verschiebbar gelagerten Türflügel umfasst, der zum Öffnen aus einer Türöffnung ausfahrbar und in seiner Offenstellung an einer Außenwand des Fahrzeugs längs verschiebbar ist und in Bewegungsumkehr die Türöffnung wieder verschließt, wobei die Lagereinheit senkrecht zur Verschieberichtung des zumindest einen Türflügels aus- und einfahrbar ist und eine zur Tragstange parallele Riegelwelle, die über ein Koppelgetriebe die Lagereinheit aus- und einfährt, und einen elektrischen Getriebemotor aufweist, der mit der Riegelwelle verbunden ist und diese rotatorisch antreibt, und das eine Führungs- und Verriegelungsvorrichtung aufweist, die einen Schwenkhebel umfasst, der mit seinem einen Ende an dem zugeordneten mindestens einen Türflügel geführt und mit seinem anderen Ende an einem Verriegelungselement befestigt ist, das in einem am Türrahmen und/oder am Fahrzeugboden ortsfest angeordneten Führungs- und Verriegelungsteil verschwenkbar gelagert ist.

Türsysteme von Personenbeförderungsfahrzeugen mit einer Innenschwenktür, einer Außenschwenktür, aber auch mit einer Schwenkschiebetür sind aus dem Stand der Technik bekannt, wobei die vorliegende Erfindung insbesondere bei Außenschwenkschiebetürsystemen Verwendung findet.

Ein Schwenkschiebetürsystem der Eingangs genannten Art ist aus der DE 199 465 01 C2 bekannt. Dieses Schwenkschiebetürsystem weist einen rechten und einen linken Türflügel zum Verschließen und zum Freigeben einer in einer Außenwand eines Personenbeförderungsfahrzeugs ausgebildeten Türöffnung auf. Die beiden Türflügel sind jeweils an einer zugeordneten Tragstange gelagert, die übereinander liegend angeordnet sind und sich jeweils parallel zur Fahrzeugaußenwand sowie in horizontaler Ausrichtung innerhalb der Türöffnung in deren oberen Bereich erstrecken. Die Tragstangen sind jeweils mit ihren beiden Enden in zwei sich gegenüberliegenden Seitenwangen fest angebracht und bilden zusammen mit den Seitenwangen eine Lagereinheit für die beiden Türflügel. Die Türflügel werden mittels einer oberhalb der Türöffnung angeordneten Antriebsvorrichtung beim Aus- und Einfahren aus der bzw. in die Türöffnung mittels einer mechanischen Steuerung, die eine Verriegelung bei geschlossenem Türflügel ermöglicht, schwenkschiebeartig bewegt. Auf diese Weise wird der Türflügel an seiner oberen Seitenkante geführt, bewegt und verriegelt. Zur Bewegungsführung der unteren Seitenkante des Türflügels wird über einen von der Antriebsvorrichtung angetriebenen Winkelmechanismus ein Türbaumrohr angelenkt, das mit einem im Bodenbereich neben der Türöffnung angeordneten Schwenkzylinder zusammenwirkt. Der Schwenkzylinder greift über einen Schwenkarm derart in den Türflügel ein, dass die untere Seitenkante in etwa synchron zur oberen Seitenkante des Türflügels geführt wird. Somit erfolgt die Verriegelung des Türflügels lediglich durch konstruktive Maßnahmen innerhalb der Antriebsvorrichtung, um ein unbeabsichtigtes Öffnen des Türflügels zu verhindern. Ein Verriegelungsmechanismus, der den Türflügel an seiner unteren Seitenkante verriegelt, ist nicht vorgesehen.

Nachteilig bei diesem Stand der Technik ist, dass für jeden Türflügel jeweils eine separate Tragstange vorgesehen ist, so dass bei einem zweiflügeligen Türsystem zwei Tragstangen übereinander liegend angeordnet sein müssen, was zu einer Erhöhung der Bauhöhe der Lagereinheit führt. Es besteht daher ein Bedürfnis, eine Lagereinheit eines Schwenkschiebetürsystems zu schaffen, die eine geringe Bauhöhe aufweist. Darüber hinaus ist es wünschenswert, ein Schwenkschiebetürsystem zu schaffen, welches derart ausgebildet ist, dass zumindest zusätzlich zu einem als Bestandteil der die Schwenkbewegung eines Türflügels bewirkenden Antriebsvorrichtung ausgebildeten Verriegelungsmechanismus den Türflügel an einer der Antriebsvorrichtung des Türflügels gegenüberliegenden Seitenkante autark und selbststeuernd verriegelt, ohne das dazu ein zusätzlicher Antrieb oder ein Türbaumrohr erforderlich ist.

Der Erfindung liegt daher die Aufgabe zugrunde, eine Lösung zu schaffen, die auf konstruktiv einfache Weise und kostengünstig ein vereinfachtes und verbessertes Schwenkschiebetürsystem bereitstellt.

Bei einem Schwenkschiebetürsystem der eingangs bezeichneten Art wird diese Aufgabe erfindungsgemäß dadurch gelöst, dass die Lagereinheit und die Tragstange oberhalb der Türöffnung in den Fahrzeuginnenraum zurückversetzt angeordnet sind und der zumindest eine Türflügel mit der Tragstange über eine winkelförmige Vertikalhalterung verbunden ist und, dass das Führungs- und Verriegelungsteil ein erstes Führungselement mit einer darin ausgebildeten ersten Kulissenöffnung aufweist, in welcher das als Kulissenschieber ausgebildete Verriegelungselement verschiebbar und verschwenkbar geführt ist.

Ebenso wird die vorstehende Aufgabe von einem Personenbeförderungsfahrzeug gelöst, dass ein Schwenkschiebetürsystem nach einem der Ansprüche 1 bis 14 aufweist.

Vorteilhafte und zweckmäßige Ausgestaltungen und Weiterbildungen der Erfindung ergeben sich aus den entsprechenden Unteransprüchen.

Durch das erfindungsgemäße Schwenkschiebetürsystem wird eine kompakte Baueinheit realisiert, die sich durch eine Lagereinheit mit geringer Bauhöhe auszeichnet. Dies ist dadurch möglich, dass auch bei zweiflügeligen Schwenkschiebetürsystemen beide Türflügel auf nur einer Tragstange gelagert werden können, so dass eine zweite Tragstange nicht mehr erforderlich ist. Ferner wird durch die Führungs- und Verriegelungsvorrichtung des Schwenkschiebesystems eine vollkommene Trennung zwischen der unteren Türflügelführung und der oberen Türflügelführung erreicht, wobei in vorteilhafter und einfacher Weise die untere Türflügelführung mit einer Türverriegelung kombiniert ist. Die Führungs- und Verriegelungsvorrichtung benötigt keine direkt mit der Antriebsvorrichtung des oder der Türflügel gekoppelten Verbindungs- oder Umlenkteile, um den Türflügel an seiner unteren Seitenkante beim Öffnen sicher zu führen und einen festen Halt des Türflügels beim Verriegeln sicherzustellen. Insbesondere ist ein störend im Bereich der Türöffnung angeordnetes Türbaumrohr nicht mehr erforderlich. Dies führt zu deutlichen Raum- und Gewichtseinsparungen des gesamten Schwenkschiebetürsystems sowie zu einer Reduzierung der Herstellungskosten. Auch sind keine zusätzlichen Antriebsmechanismen in Form von Motoren zur Verriegelung des oder der Türflügel notwendig, die störend im Bereich der Türöffnung anzuordnen und darüber hinaus mit einer Verkleidung zu versehen wären. Darüber hinaus kann die Führungs- und Verriegelungsvorrichtung als hoch kompakt ausgebildete Baugruppe in den Türrahmen der Türöffnung integriert werden.

Um eine kompakte Bauweise zur Lagerung der Türflügel zu ermöglichen, sieht die Erfindung in Ausgestaltung vor, dass die Tragstange an ihren beiden Endseiten jeweils an einer Seitenwange der Lagereinheit befestigt ist und dass die jeweilige Seitenwange mittels zumindest einer Rolle in einer Führungsschiene verschiebbar gelagert ist. Dadurch ist sichergestellt, dass die Lagereinheit beim Öffnen und Schließen der Türöffnung quer zur Fahrzeuglängsachse aus- und einfahrbar ist.

Eine konstruktiv einfach zu realisierende Möglichkeit einer kompakten Bauweise des Schwenkschiebtürsystems besteht darin, dass die jeweilige Führungsschiene als U-Schiene ausgebildet ist, die über ein Basisblech oder ein Trägerelement an der Fahrzeuginnenwand oder an der Fahrzeugkarosserie befestigt ist. Bei einer Befestigung der Führungsschienen an einem Basisblech kann das Schwenkschiebesystem vormontiert werden und als komplette Einheit im Fahrzeug angebracht werden, so dass ein Zusammenbau der Einzelteile des Schwenkschiebetürsystems im Fahrzeug entfällt.

Zur Reduzierung des Einbauraums und zur kompakten Ausgestaltung des Schwenkschiebetürsystems ist es von Vorteil, wenn die jeweilige Führungsschiene quer zur Fahrzeugaußenwand und auf der der Tragstange zugewandten Seite der jeweiligen Seitenwange angrenzend an dieser angeordnet ist. Bei aus der Praxis bekannten Systemen sind die Führungsschienen auf der von der Tragstange weg weisenden Seite der Seitenwangen angeordnet, so dass hierfür ein zusätzlicher Einbauraum in Anspruch genommen wird.

Zur Lagerung und Befestigung des oder der Türflügel sieht die Erfindung in Weiterbildung vor, dass der zumindest eine Türflügel eine Halterung mit einer als Rohrabschnitt ausgebildeten Kugellängsführung aufweist, wobei die Kugellängsführung an der Tragstange verschiebbar gelagert ist. Durch eine entsprechende Länge des Rohrabschnittes und der Kugellängsführung wird eine stabile und verbindungssteife Lagerung des oder der Türflügel an den Tragstangen sichergestellt.

Dabei ist es besonders vorteilhaft, wenn in Schließstellung des zumindest einen Türflügels der Rohrabschnitt im Wesentlichen mit einer Schließkante des Türflügels bündig abschließt. Dadurch ist es möglich, das Schwenkschiebetürsystem auf konstruktiv sehr einfache Weise von einem zweiflügeligen auf ein einflügeliges Schwenkschiebetürsystem zu modifizieren, da die einem Türflügel zugeordneten Bauteile keinen störenden Einfluss auf die Funktion der Bauteilen des anderen Türflügels ausüben.

Um eine Steuerung des Getriebemotors zu vermeiden, sieht die Erfindung in weiterer Ausgestaltung vor, dass die Lagereinheit eine Gewindespindel umfasst, wobei der elektrische Getriebemotor die Gewindespindel und die Lagereinheit über eine mechanische Kopplung antreibt.

Damit die Bauhöhe der Lagereinheit aufgrund des Getriebemotors nicht zunimmt, ist es weiterhin von Vorteil, wenn der elektrische Getriebemotor in der Lagereinheit parallel zur Gewindespindel angeordnet ist und über Zahnräder mit der Gewindespindel in Antriebsverbindung steht.

Eine sehr kompakte Bauweise der Lagereinheit lässt sich ferner dadurch realisieren, dass die Gewindespindel in den beiden Seitenwangen der Lagereinheit drehbar gelagert ist.

In zweckmäßiger Ausgestaltung der Erfindung ist ferner vorgesehen, dass die Gewindespindel parallel zu der Tragstange und der Riegelwelle angeordnet ist. Auch diese Maßnahme trägt zur Reduzierung der Bauhöhe bei.

Um eine dem praktischen Bedarf des Schwenkschiebetürsystems anpassbare Verriegelung zu ermöglichen, welche auch bei stärkeren Erschütterungen des Fahrzeugs während der Fahrt eine Entriegelung des oder der Türflügel verhindert, sieht die Erfindung weiterhin vor, dass in Schließstellung des zumindest einen Türflügels eine als Biegefeder ausgebildete Rückstellfeder mit einer die Federkraft der Rückstellfeder einstellbaren Korrektureinrichtung die Riegelwelle in eine Totpunktstellung gedrückt hält.

Eine besonders kompakte Bauform mit einer geringen Anzahl von Bauteilen kann in Ausgestaltung der Erfindung dadurch erreicht werden, dass ein an dem zumindest einen Türflügel befestigter Verbindungsflansch, die Vertikalhalterung, der Rohrabschnitt, eine an einem Verbindungsarm angebrachte Spindelmutter und eine Halterung einstückig, vorzugsweise als ein Gussteil, ausgebildet sind.

Um einen sicheren und festen Halt der Führungs- und Verriegelungsvorrichtung in deren Verriegelungsposition zu gewährleisten, sieht die Erfindung in Ausgestaltung vor, dass die erste Kulissenöffnung einen Verriegelungsbereich und der Kulissenschieber einen Verriegelungsabschnitt aufweist, die in der Verriegelungsposition der Führungs- und Verriegelungsvorrichtung miteinander in Eingriff stehen. Bei in den Verriegelungsbereich eingerücktem Verriegelungsbereich hat dies den Vorteil, dass bei einer quer zur Richtung der Fahrzeuglängsachse wirkenden Kraft keine Kraftkomponente auf die Führungs-und Verriegelungsvorrichtung wirkt, die ein Ausrücken des Verriegelungsabschnitts aus dem Verriegelungsbereich bewirken könnte. Außerdem ist ein Ausrücken aus dem Verriegelungsabschnitt in Längsrichtung des Fahrzeugs nicht möglich, da der oberseitige Antriebsmechanismus die Tür in ihrer Verschlussposition hält.

Bei der Erfindung wird die Bewegungswirkung des von der Lagereinheit bewegten Türflügels auf den Schwenkhebel und von diesem auf den Kulissenschieber übertragen, so dass eine konstruktiv einfach zu realisierende Möglichkeit einer kompakten Bauweise der Führungs- und Verriegelungsvorrichtung, durch welche die Verriegelung aufgehoben und eine Verschwenkung möglich ist, darin besteht, dass der Schwenkhebel beim Öffnungsvorgang des Türflügels den Verriegelungsabschnitt des Kulissenschiebers aus dem Verriegelungsbereich der ersten Kulissenöffnung heraus verschiebt oder zieht und relativ zu diesem verschwenkt.

In Weiterbildung sieht die Erfindung vor, dass der Schwenkhebel beim Schließvorgang des Türflügels den Verriegelungsabschnitt des Kulissenschiebers vor den Verriegelungsbereich der ersten Kulissenöffnung verschwenkt und dann in diesen hinein zieht oder schiebt, so dass ein sicherer und fester Halt des Türflügels bei dessen Verriegelung gewährleistet ist.

Zur Reduzierung des Einbauraums und zur kompakten Ausgestaltung der Führungs- und Verriegelungsvorrichtung ist es von Vorteil, wenn die Kulissenöffnung den Verriegelungsbereich und einen Verschwenkungsbereich aufweist, so dass der Öffnungsvorgang und die Verriegelung des Türflügels mittels nur eines Bauteils realisiert werden können.

In weiterer Ausgestaltung sieht die Erfindung vor, dass der Verriegelungsabschnitt des Kulissenschiebers in Form einer Rastnase ausgebildet ist. Dadurch ist es möglich, dass das Verriegeln und Verschwenken des Kulissenelements allein durch ein Bauteil, nämlich dem Kulissenschieber mit Rastnase, realisiert wird. Somit können senkrecht zur Fahrzeuglängsachse wirkende Kräfte, die beispielsweise beim Anstoßen von Fahrgästen an den Türflügel auftreten, ein Ausrücken der Rastnase aus dem Verriegelungsbereich der ersten Kulissenöffnung und eine Bewegung des Türflügels in Richtung quer zur Fahrzeuglängsachse nicht bewirken.

Bei einem im oberen Bereich der Türöffnung an einer Lagereinheit mit Antriebsvorrichtung gelagerten Türflügel ist es weiterhin von Vorteil, wenn das Führungs- und Verriegelungsteil bodenseitig am Türrahmen angeordnet ist, damit der Türflügel in der Verriegelungsposition über seine gesamte Höhe sicher verriegelt ist.

Eine kostengünstige und konstruktiv einfache Möglichkeit, durch die der Türflügels mittels der Führungs- und Verriegelungsvorrichtung schwenkschiebeartig in einer optimal auslegbaren, kurvenförmigen Bewegungsbahn bewegt werden kann, so dass beim Öffnen und Schließen des Türflügels nur ein geringer Raumbedarf erforderlich ist, besteht darin, dass der Schwenkhebel ein Rollenschwenkhebel, insbesondere ein Doppelrollenschwenkhebel, ist. Dabei ist es weiter von Vorteil, wenn der Schwenkhebel eine in einer türseitigen Führung laufende Rolle, vorzugsweise ein darin laufendes Rollenpaar, aufweist.

Um die bauliche Stabilität der Führungs- und Verriegelungsvorrichtung zu erhöhen und damit der Kulissenschieber sicher in Fahrzeuglängsrichtung geführt werden kann, sieht die Erfindung weiterhin vor, dass das Führungs- und Verriegelungsteil ein zweites Führungselement mit einer darin ausgebildeten zweiten Kulissenöffnung in Form einer Nut oder eines Langlochs aufweist, in die/das ein Führungsabschnitt des Kulissenschiebers eingreift und in welcher/welchem er in Fahrzeuglängsrichtung verschiebbar geführt ist.

Zur weiteren Erhöhung der Kompaktheit der Führungs- und Verriegelungsvorrichtung sieht die Erfindung in Ausgestaltung vor, dass das erste Führungselement und das zweite Führungselement einstückig ausgebildet oder mittels Verstiftung, Verschraubung oder Verschweißung drehfest miteinander verbunden sind. Durch die einstückige Ausbildung dieser beiden Führungselemente ist es möglich, dass dieses einstückige Bauteil in nur einem einzigen Herstellungsprozess hergestellt werden kann, so dass sich die Herstellungskosten insgesamt reduzieren.

Um die Führungs- und Verriegelungsvorrichtung als komplette und kompakte Baueinheit wartungsfreundlich montieren und im Bedarfsfall bei Verschleißerscheinungen austauschen zu können, ist es weiterhin von Vorteil, wenn das erste Führungselement und/oder das zweite Führungselement mittels einer Tragplatte an dem Türrahmen angebracht sind.

In weitere Ausgestaltung der Erfindung ist vorgesehen, dass das erste Führungselement und/oder das zweite Führungselement drehfest an der Tragplatte angebracht sind. Indem zumindest eines der beiden Führungselement drehfest an der Tragplatte angebracht ist, entfällt eine drehfeste Anbringung des anderen Führungselements an der Tragplatte, wenn beide Führungselemente drehfest miteinander verbunden sind, so dass eine Demontage und ein Austausch der Führungs- und Verriegelungsvorrichtung von der Tragplatte problemlos und auf einfache Weise durch Demontieren nur eines der beiden Führungselements möglich.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
- Figur 1: eine schematische Frontansicht eines erfindungsge- mäßen Schwenkschiebetürsystems,
- Figur 2: eine detaillierte Frontansicht des oberhalb der Türöffnung angeordneten Schwenkschiebetürsystems,
- Figur 3: eine Schnittansicht entlang der Line A-A in Figur 2,
- Figur 4: eine Schnittansicht entlang der Linie B-B in Figur 2,
- Figur 5: eine Draufsicht auf eine Führungsschiene,
- Figur 6: eine schematische Seitenansicht einer Führungs- und Verriegelungsvorrichtung,
- Figur 7: eine schematische Seitenansicht eines Verriege- lungselements,
- Figur 8: eine schematische Draufsicht auf ein zweites Füh- rungselement mit eingesetztem Führungsabschnitt des Verriegelungselements,
- Figur 9: eine zweite schematische Seitenansicht der erfin- dungsgemäßen Führungs- und Verriegelungsvorrich- tung,
- Figur 10: eine Draufsicht auf einen Schwenkhebel der Füh- rungs- und Verriegelungsvorrichtung,
- Figur 11: in schematischer Darstellung eine Draufsicht auf die Führungs- und Verriegelungsvorrichtung in ihrer Verriegelungsposition,
- Figur 12: in schematischer Darstellung eine Draufsicht auf die Führungs- und Verriegelungsvorrichtung in ihrer Öffnungsposition,
- Figur 13: eine Draufsicht auf eine weitere Ausführungsform eines ersten Führungselements und
- Figur 14: eine schematische Seitenansicht einer weiteren Aus- führungsform eines Verriegelungselements.

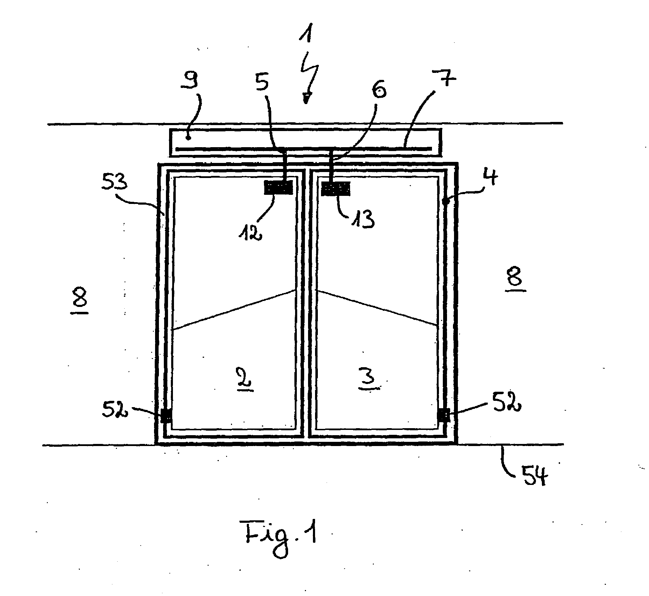

Die Figur 1 zeigt ein Schwenkschiebetürsystem 1 eines nicht näher dargestellten Personenbeförderungsfahrzeugs mit einem linken und einem rechten Türflügel 2 und 3, die eine Türöffnung 4 des Personenbeförderungsfahrzeugs verschließen. Das nachstehend im Detail erläuterte Schwenkschiebetürsystem 1 ist aber nicht auf ein solches zweiflügeliges Schwenkschiebetürsystem 1 beschränkt, sondern kann auch bei einflügeligen, d.h. lediglich einen Türflügel 2 oder 3 aufweisenden, Schwenkschiebetürsystemen 1 verwendet werden. Jeder der beiden Türflügel 2, 3 ist in seinem oberen Bereich der Türöffnung 4 über eine jeweilige Halterung 5 und 6 an einer Tragstange 7, die sich parallel zu einer Fahrzeugaußenwand B oberhalb der Türöffnung 4 erstreckt, verschiebbar gelagert. Die Tragstange 7 gehört zu einer im oberen Bereich der Türöffnung 4 in Figur 1 nur schematisch dargestellten Lagereinheit 9, wobei eine nicht näher dargestellte Antriebsvorrichtung die beiden Türflügel 2 und 3 zum Öffnen und Verschließen der Türöffnung 4 sowie bei ihrer Verschiebung längs der Fahrzeugaußenwand 8 antreibt und bewegt. Das Schwenkschiebetürsystem 1 weist ferner je Türflügel 2, 3 ein Führungs- und Verriegelungsteil 52 auf, das jeweils einem jeweiligen Türflügel 2, 3 zugeordnet ist und auf einer dem Fahrzeuginnenraum zugewandten Seite des jeweiligen Türflügels 2, 3 angeordnet ist.

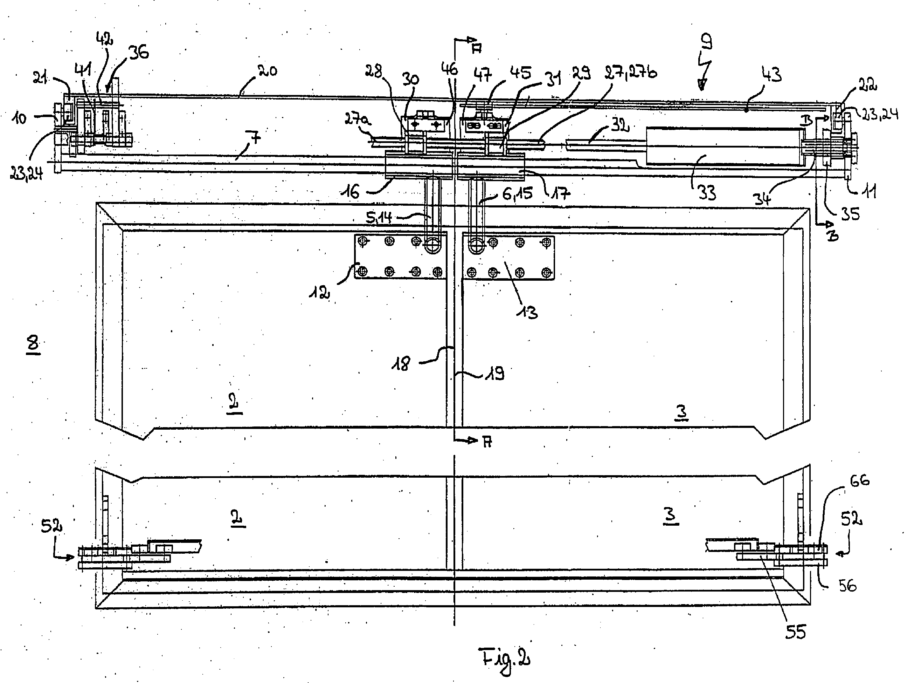

Die in der Figur 2 im Detail dargestellte Lagereinheit 9 umfasst neben der Tragstange 7 zusätzlich zwei sich gegenüberliegende Seitenwangen 10 und 11, in denen die Tragstange 7 mit ihren beiden Enden drehfest angebracht ist. Die Tragstange 7 und die beiden Seitenwangen 10, 11 bilden die Lagereinheit 9 für die beiden Türflügel 2, 3. An dem linken und dem rechten Türflügel 2 und 3 ist jeweils unterhalb der Oberkante des entsprechenden Türflügels 2, 3 ein Verbindungsflansch 12 bzw. 13 befestigt, an dem wiederum jeweils die in Form einer winkelförmigen Vertikalhalterung 14 bzw. 15 ausgebildete Halterung 5 bzw. 6 angebracht ist. Der linke Türflügel 2 ist über einen mit der Vertikalhalterung 14 verbundenen Rohrabschnitt 16 und der rechte Türflügel 3 über einen mit der Vertikalhalterung 15 verbundenen Rohrabschnitt 17 mit der Tragstange 7 verbunden. Die Rohrabschnitte 16, 17 weisen jeweils eine die Tragstange 7 umgreifende Kugellängsführung auf, so dass die Türflügel 2, 3 verschiebbar an der Tragstange 7 gelagert sind. Die Rohrabschnitte 16 und 17 sind in Schließstellung, bei der die Türflügel 2, 3 die Türöffnung 4 verschließen, derart an der Tragstange 7 angeordnet, dass sie mit einer jeweiligen Hauptschließkante 18, 19 des Türflügels 2, 3 nahezu bündig abschließen. Die Rohrabschnitte 16 und 17 erstrecken sich demnach bei geschlossenen Türflügeln 2, 3 nicht über die jeweilige Hauptschließkante 18, 19 des jeweiligen Türflügels 2, 3 hinaus, so dass eine Modifizierung auf ein einflügeliges Schwenkschiebetürsystem 1 auf konstruktiv einfache Weise möglich ist, da keine Bauteile des jeweiligen Türflügels 2, 3 im Einbaubereich des anderen Türflügels 2, 3 angeordnet sind.

Ein Basisblech 20, an dem die Lagereinheit 9 und somit die Türflügel 2, 3 gelagert sind, erstreckt sich oberhalb und über die gesamte Länge der Türöffnung 4 und ist über der Tragstange 7 angeordnet. Das Basisblech 20 dient dazu, das Schwenkschiebetürsystem 1 vor der Montage im Fahrzeuginneren komplett zusammenzubauen, so dass ein Zusammenbau der Einzelteile des Schwenkschiebetürsystems 1 im Fahrzeuginneren nicht mehr notwendig ist und das vormontierte Schwenkschiebetürsystem 1 als eine Baueinheit im Fahrzeuginnenraum befestigt werden kann.

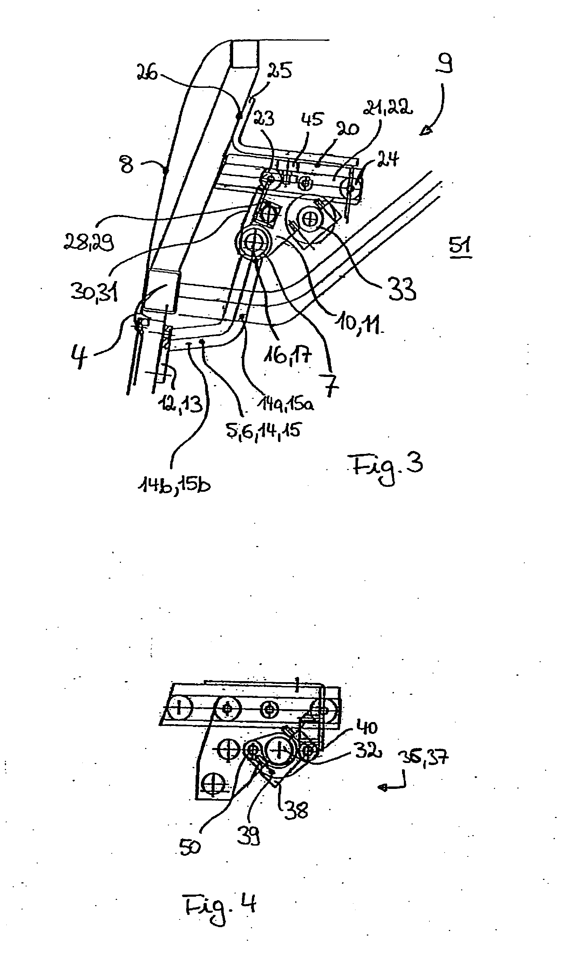

Zwei quer zur Fahrzeugaußenwand 8 angeordnete Führungsschienen 21 und 22, die parallel zueinander verlaufen und U-förmig ausgebildet sind, sind an den beiden sich gegenüberliegenden Längsenden des Basisblechs 20 befestigt. Die Führungsschienen 21, 22 sind jeweils auf der der Tragstange 7 zugewandten Seite der jeweiligen Seitenwangen 10, 11 angeordnet und befestigt. Ferner sind in jeweils einer der beiden Führungsschienen 21, 22 Rollen 23, 24 eingesetzt, die quer zur Fahrzeugaußenwand 8 in der jeweiligen Führungsschiene 21, 22 verschiebbar sind. Figur 3 beschränkt sich auf eine Darstellung eines Längsendes des Basisblechs 20 und zeigt die in einer der beiden Führungsschienen 21, 22 angeordneten Rollen 23, 24. Die Rollen 23, 24 sind mit der zugeordneten Seitenwange 10 bzw. 11 verbunden und drehbar an dieser gelagert, so dass die beiden über die Tragstange 7 verbundenen Seitenwangen 10 und 11 jeweils durch die zwei Rollen 23, 24 in den Führungsschienen 21, 22 verfahrbar gelagert sind. Somit ist die Lagereinheit 9 im Wesentlichen senkrecht zur Fahrzeugaußenwand 8 in den beiden Führungsschienen 21, 22 horizontal verfahrbar. Alternativ können die beiden Führungsschienen 21, 22 anstatt an dem Basisblech 20 über ein wie in Figur 3 dargestelltes, als Winkel ausgebildetes Trägerelement 25 an dem Basisblech 20 befestigt werden, welches dann an der Fahrzeuginnenwand 26 montiert wird.

Die in Figur 3 dargestellte Lagereinheit 9 ist oberhalb und außerhalb der Türöffnung 4 und in den Fahrzeuginnenraum 51 zurückversetzt angeordnet. Insbesondere ist die Lagereinheit 9 außerhalb der Türöffnung 4 angeordnet, was infolge der speziellen Ausgestaltung der winkelförmigen Vertikalhalterungen 14, 15 möglich ist. Die Vertikalhalterungen 14, 15 sind jeweils in Form eines Winkelelements ausgebildet, dessen einer Winkelabschnitt 14a, 15a mit dem jeweiligen Rohrabschnitt 16, 17 verbunden ist und dessen anderer Winkelabschnitt 14b, 15b an dem jeweiligen Verbindungsflansch 12, 13 befestigt ist. Lediglich der an dem jeweiligen Verbindungsflansch 12, 13 befestigte Winkelabschnitt 14b, 15b ragt in den Bereich der Türöffnung 4 minimal hinein, was aber bei der Dimensionierung der Türöffnung 4 nicht berücksichtigt werden braucht, da die Winkelabschnitte 14b, 15b der Vertikalhalterungen 14, 15 beim Öffnen der Türflügel 2, 3 mit diesen mitbewegt werden und somit nicht störend im Bereich der Türöffnung 4 verbleiben.

Eine Bewegung der beiden Türflügel 2, 3 längs der Tragstange 7 erfolgt über eine an sich bekannte Gewindespindel 27, die parallel zu der Tragstange 7 angeordnet und an den beiden Seitenwangen 10, 11 drehbar gelagert ist. Die Gewindespindel 27 ist in zwei Hälften 27a und 27b unterteilt, die zueinander gegenläufige Gewindesteigungen aufweisen, so dass beim Öffnungsvorgang der linke Türflügel 2 nach links und der rechte Türflügel 3 nach rechts bewegt wird. Auf jeder der zwei Hälften 27a, 27b der Gewindespindel 27 ist jeweils eine Spindelmutter 28, 29 angeordnet, die an dem entsprechenden Rohrabschnitt 16, 17 befestigt ist. Die Spindelmuttern 28, 29 umgreifen einen entsprechenden Gewindeabschnitt der Gewindespindel 27. Darüber hinaus ist jede Spindelmutter 28, 29 an einem Verbindungsarm 30, 31 befestigt, der mit einem entsprechenden Rohrabschnitte 16, 17 verbunden ist. Auf diese Weise ist der linke Türflügel 2 über den Verbindungsflansch 12, die Vertikalhalterung 14 und den Rohrabschnitt 16 mit der an dem Verbindungsarm 30 befestigten Spindelmutter 28 verbunden. Entsprechend ist der rechte Türflügel 3 über den Verbindungsflansch 13, die Vertikalhalterung 15 und den Rohrabschnitt 17 mit der an dem Verbindungsarm 31 befestigten Spindelmutter 29 verbunden. Bei einer Rotation der Gewindespindel 27 in eine erste Drehrichtung führen die beiden Spindelmuttern 28, 29 eine voneinander weg weisende Bewegung entlang der Gewindespindel 27 durch, so dass die beiden Türflügel 2, 3 entlang der Tragstange 7 jeweils in entgegen gesetzter Richtung längs der Fahrzeugaußenwand 8 bewegt werden und die Türöffnung 4 freigeben. Demgegenüber führen die beiden Spindelmuttern 28, 29 bei einer Rotation der Gewindespindel 27 in eine der ersten Drehrichtung entgegen gesetzte Richtung eine aufeinander zu weisende Bewegung entlang der Gewindespindel 27 durch, so dass sich die beiden Türflügel 2, 3 zur Verschließung der Türöffnung 4 in Schließposition entlang der Tragstange 7 aufeinander zu bewegen.

In den Seitenwangen 10, 11 ist ferner eine Riegelwelle 32 drehbar gelagert, die parallel zu der Gewindespindel 27 angeordnet ist. An der Riegelwelle 32 ist in deren Längsrichtung ein elektrischer Getriebemotor 33 angeordnet und mit dieser verbunden, dessen Abtriebswelle 34 in der in Figur 2 rechten Seitenwange 11 drehbar gelagert ist. Zwischen dem elektrischen Getriebemotor 33 und der die Abtriebswelle 34 lagernden Seitenwange 11 ist auf der Abtriebswelle 34 ein Zahnrad 35 drehfest angebracht, dass mit einem nicht näher dargestellten Zahnrad, das drehfest auf der Gewindespindel 27 angebracht ist, in Eingriff steht. Alternativ kann der elektrische Getriebemotor 33 als eigenständiges Bauteil im Fahrzeuginneren angeordnet sein und die Riegelwelle 32 über eine Gelenkwelle, insbesondere über eine Kardanwelle, antreiben.

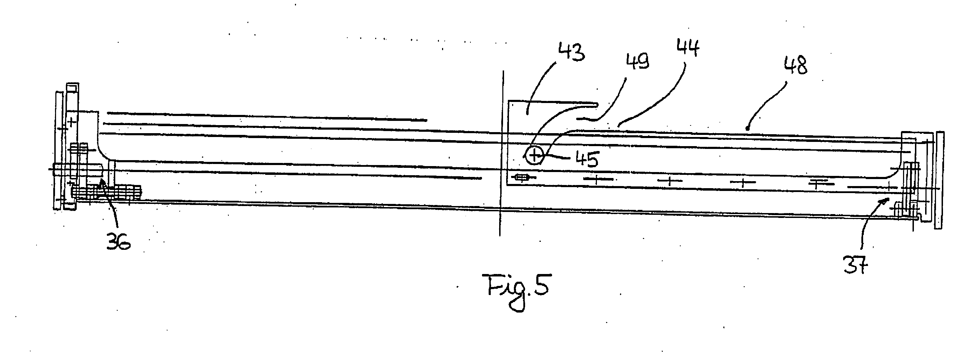

Ein an sich bekanntes Koppelgetriebe ist ferner im Bereich der linken Seitenwange 10 ausgebildet, wohingegen ein im Wesentlichen gleich aufgebautes Koppelgetriebe zwischen dem elektrischen Getriebemotor 33 und der rechten Seitenwange 11 ausgebildet ist. Beide Koppelgetriebe, die in Figur 5 nur schematisch dargestellt sind, weisen die Funktion jeweils einer an sich bekannten Verriegelung 36, 37 auf. Jede Verriegelung 36, 37 umfasst eine in Figur 4 dargestellte Segmentscheibe 38, die mit der Riegelwelle 32 drehfest verbunden ist, und ein Verbindungselement 39 mit zwei Schenkeln, von denen einer an einer Lagerachse 40 schwenkbar gelagert ist. Das freie Ende des anderen Schenkels ist mittels eines Verbindungsstifts 50 an der Segmentscheibe 38 drehbar gelagert. Die beiden Schenkel sind derart ausgebildet, dass sie eine gebogene Form aufweisen und die Riegelwelle 32 in Schließstellung der Türflügel 2, 3 abschnittsweise umgreifen. Bei Rotation der Riegelwelle 32 wird die Segmentscheibe 38 und somit der drehbar an der Segmentscheibe 38 gelagerte Schenkel des Verbindungselements 39 nach unten verschwenkt, so dass die Riegelwelle 32 freigegeben ist. Gleichzeitig bewirkt die Rotation der Riegelwelle 32, dass über die in den Seitenwangen 10, 11 gelagerte Riegelwelle 32 die gesamte Lagereinheit 9 über die Rollen 23, 24 in den Führungsschienen 21, 22 nach außen gefahren wird, so dass gleichzeitig die Türflügel 2, 3 aus der Türöffnung 4 heraus bewegt werden und ein synchrones Aus- und Einfahren der gesamten Lagereinheit 9 ohne ein Verkanten sichergestellt ist.

Zwei an sich bekannte Führungsschienen 43 sind an der Unterseite des Basisblechs 20 angebracht und erstrecken sich jeweils oberhalb sowie im Wesentlichen längs einer jeweiligen Hälfte 27a, 27b der Gewindespindel 27. In den Figuren 2 und 5 ist aus Gründen der Übersichtlichkeit nur eine der beiden Führungsschienen 43 dargestellt, die oberhalb der rechten Hälfte 27b der Gewindespindel 27 angeordnet ist. In einen in der jeweiligen Führungsschiene 43 ausgebildeten Führungsabschnitt 44 greift eine Führungsrolle 45 ein. Die Führungsrolle 45 ist in einer jeweiligen Halterung 46, 47, die mit einem entsprechenden Verbindungsarm 30, 31 verbunden ist und einem entsprechenden Türflügel 2, 3 zugeordnet ist, drehbar gelagert. Der an sich bekannte Führungsabschnitt 44 weist einen zu der Tragstange 7 parallelen Abschnitt 48 und einen bogenförmigen Abschnitt 49 auf. In den beiden Abschnitten 48, 49 der jeweiligen Führungsschienen 43 wird die entsprechende Führungsrolle 45 während der Öffnungs- und Schließbewegung der Türflügel 2, 3 nach Art einer schwenkschiebeartigen Bewegung geführt, so dass beim Öffnungsvorgang die Türflügel 2, 3 aus der Türöffnung 4 entlang einer kurven- und bogenförmigen Bahn und anschließend entlang der Fahrzeugaußenwand 8 bewegt werden.

Der Bewegungsablauf beim Öffnen und Schließen der Türflügel 2, 3 entspricht im Wesentlichen dem aus der DE 199 46 501 C2 bekannten Bewegungsablauf, so dass von einer detaillierten Erläuterung abgesehen wird.

In der in Figur 2 dargestellten Schließstellung sind die beiden Türflügel 2, 3 in der Türöffnung 4 angeordnet und verschließen diese. Die Lagereinheit 9 befindet sich dabei in einer wie in Figur 3 dargestellten zurückgefahrenen Stellung. Zum Öffnen der Türflügel 2, 3 wird der elektrische Getriebemotor 33 eingeschaltet, so dass das Drehmoment des Motors sowohl eine Rotation der Riegelwelle 32 als auch eine Rotation der Abtriebswelle 34 erzeugt. Eine anfängliche Rotation der Abtriebswelle 34 wird über das Zahnrad 35 auf die Gewindespindel 27 übertragen und versetzt diese in Rotation, wodurch die jeweilige Spindelmutter 28, 29 in Längsrichtung bewegt wird. Da die jeweilige Spindelmutter 28, 29 mit dem zugeordneten Rohrabschnitt 16, 17 der Türflügel 2, 3 fest verbunden ist und darüber hinaus die jeweilige Führungsrolle 45 in der Führungsschiene 43 gelagert ist, kann ausgehend von der Schließstellung in einer ersten Bewegung, bei der die Führungsrolle 45 in dem jeweiligen bogenförmigen Abschnitt 49 verläuft, nur ein kleiner Rotationsanteil des Getriebemotors 33 über die Gewindespindel 27 in eine Längsverschiebung umgesetzt werden, wohingegen ein großer Rotationsanteil über die Riegelwelle 32 umgesetzt wird. Durch die Rotation der Riegelwelle 32 und damit der Segmentscheibe 38 wird der drehbar an der Segmentscheibe 38 gelagerte Schenkel des Verbindungselements 39 nach unten geschwenkt, während sich die Riegelwelle 32 mit der Lagereinheit 9 und den daran befestigten Türflügeln 2, 3 in Richtung zur Fahrzeugaußenseite verschiebt. Dabei wird die Führungsrolle 45 in dem bogenförmigen Abschnitt 49 der Führungsschiene 43 in Längsrichtung verschoben, so dass sich die Türflügel 2, 3 seitlich verschieben und öffnen. Beim Übergang der Führungsrolle 45 in den parallelen Abschnitt 48 der Führungsschiene 43 beendet die Riegelwelle 32 ihre Rotation, so dass das weitere Drehmoment des elektrischen Getriebemotors 33 nun ausschließlich über die Abtriebswelle 34 und das Zahnrad 35 auf die Gewindespindel 27 übertragen wird. Dabei werden die beiden Spindelmuttern 28, 29 voneinander weg bewegt, so dass die Türflügel 2, 3 entlang der Fahrzeugaußenwand 8 verschoben werden und die Türöffnung 4 freigegeben wird. Der Schließvorgang der Türflügel 2, 3 erfolgt in umgekehrter Bewegungsreihenfolge.

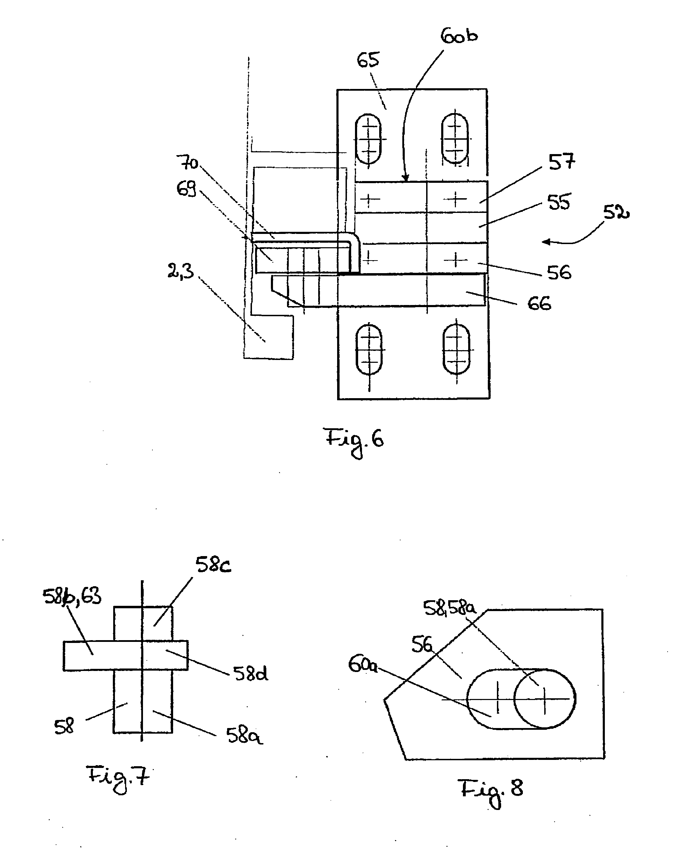

In der Schließstellung der Türflügel 2, 3 befinden sich die Verriegelungen 36, 37 zumindest in einer in Figur 4 dargestellten Totpunktstellung. Wenn bei geschlossenen Türflügeln 2, 3 von innen gegen einen oder beide Türflügel 2, 3 gedrückt wird, wirkt diese Kraft quer bzw. senkrecht zu den Türflügeln 2, 3, wodurch die Riegelwelle 32 gegen den Verbindungsstift 50 drückt, so dass das Verbindungselement 39 aufgrund der kinematischen Verhältnisse nicht aufgedrückt werden kann. Dadurch wird aber lediglich ein Öffnen der Türflügel 2, 3 aufgrund einer quer zu den Türflügeln 2, 3 wirkenden Kraft verhindert. Um darüber hinaus auch bei Erschütterungen, bei denen eine nicht ausschließlich quer zu den Türflügeln 2, 3 wirkende Kraft auf die jeweilige Verriegelung 36, 37 einwirkt, ein ungewolltes Öffnen der Türflügel 2, 3 zu verhindern, ist an der in Figur 2 und 6 linken Verriegelung 36 eine Rückstellfeder 41 als Bestandteil der Verriegelung 36 angeordnet. Die als Biegefeder ausgebildete Rückstellfeder 41 ist mit einem Ende an einem Bolzen 42 angebracht, der in eine Bohrung einer nicht näher dargestellten Platte eingesetzt ist. Das andere Ende der Rückstellfeder 41 ist derart mit dem Verbindungselement 39 gekoppelt, dass der mit der Segmentscheibe 38 verbundene Schenkel des Verbindungselements 39 unter Vorspannung steht, die das Verbindungselement 39 in Verriegelungsstellung drückt, so dass auch eine nicht ausschließlich quer zu den Türflügeln 2, 3 wirkende Kraft keine ungewollte Entriegelung bewirkt. Die Federkraft der Rückstellfeder 41 zur Sicherstellung einer Verriegelung kann darüber hinaus dem praktischen Bedarf des Schwenkschiebetürsystems 1 angepasst werden. Dazu kann die Spannung der Rückstellfeder 41, die durch die Anordnung von Bolzen 42 und Verbindungselement 39 definiert ist, durch Veränderung der Lage des Bolzens 41 nach Art einer Korrektureinrichtung verändert werden. Zu diesem Zweck können mehrere Bohrungen in der nicht näher dargestellten Platte ausgebildet sein, in die der Bolzen 41 unter Änderung der Spannung der Rückstellfeder 41 einsetzbar ist.

Zur Bewegungsführung der unteren Seitenkante der jeweiligen Türflügel 2, 3 ist eine Führungs- und Verriegelungsvorrichtung vorgesehen, die je Türflügel 2, 3 ein Führungs-und Verriegelungsteil 52 aufweist, das jeweils einem Türflügel 2, 3 zugeordnet ist. Im Ausführungsbeispiel ist pro Türflügel 2, 3 bodenseitig jeweils ein Führungs- und Verriegelungsteil 52 am Türrahmen 53 in Höhe einer unteren Seitenkante von linkem oder rechtem Türflügel 2, 3 angebracht. Denkbar ist aber auch, das Führungs- und Verriegelungsteil 52 auf jeder beliebigen Höhe des Türflügels 2, 3 am Türrahmen 53, ausschließlich nur am Fahrzeugboden 54 oder am Türrahmen 53 und Fahrzeugboden 54 anzuordnen, wobei es aus Gründen des Einbaus und im Hinblick auf eine effektive Verriegelung des jeweils zugeordneten Türflügels 2, 3 bei im oberen Bereich der Türöffnung 4 angebrachter Antriebsvorrichtung bzw. Lagereinheit 9 zweckmäßig erscheint, das Führungs- und Verriegelungsteil 52 im Bereich des Fahrzeugbodens 54 anzuordnen.

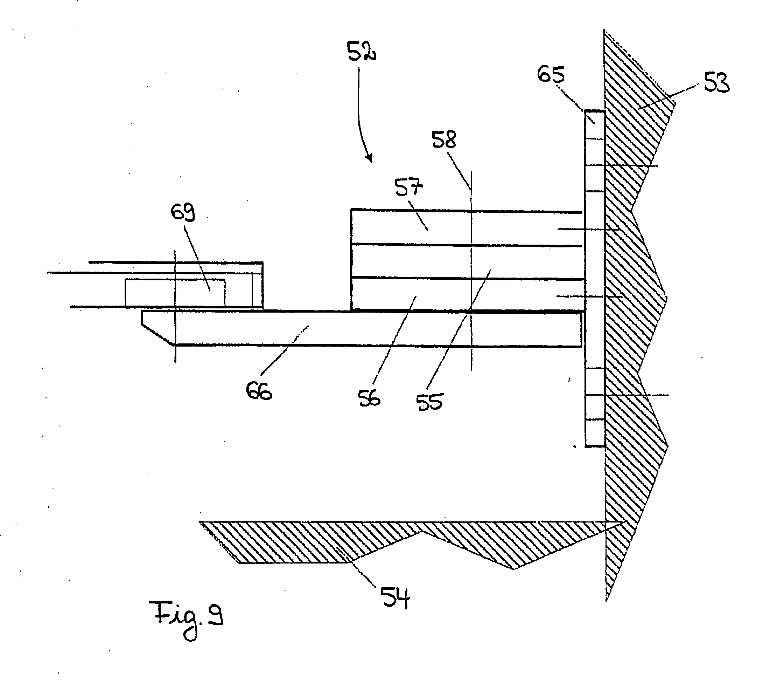

Das in den Figuren 2, 6 und 9 dargestellte Führungs- und Verriegelungsteil 52 umfasst ein erstes Führungselement 55, ein zweites Führungselement 56 und ein drittes Führungselement 57, die jeweils als plattenförmiges Bauteil ausgebildet und übereinanderliegend angeordnet sind, wobei das erste Führungselement 55 sandwichartig zwischen dem zweiten Führungselement 56 und dem dritten Führungselement 57 angeordnet ist. Ein als Kulissenschieber 58 ausgebildetes Verriegelungselement ist in einer ersten Kulissenöffnung 59 im ersten Führungselement 55 und in einer jeweils in dem zweiten und dritten Führungselement 56 und 57 ausgebildeten zweiten und dritten Kulissenöffnung 60a, 60b eingesetzt. Da das dritte Führungselement 57 identisch zum zweiten Führungselement 56 ausgebildet ist, ist lediglich in Fig. 8 das zweite Führungselement 56 dargestellt. Aufgrund der in den Figuren 6 und 9 dargestellten Zusammenbauposition der Führungs- und Verriegelungsvorrichtung ist der Kulissenschieber 58 in diesen Figuren nicht zu erkennen.

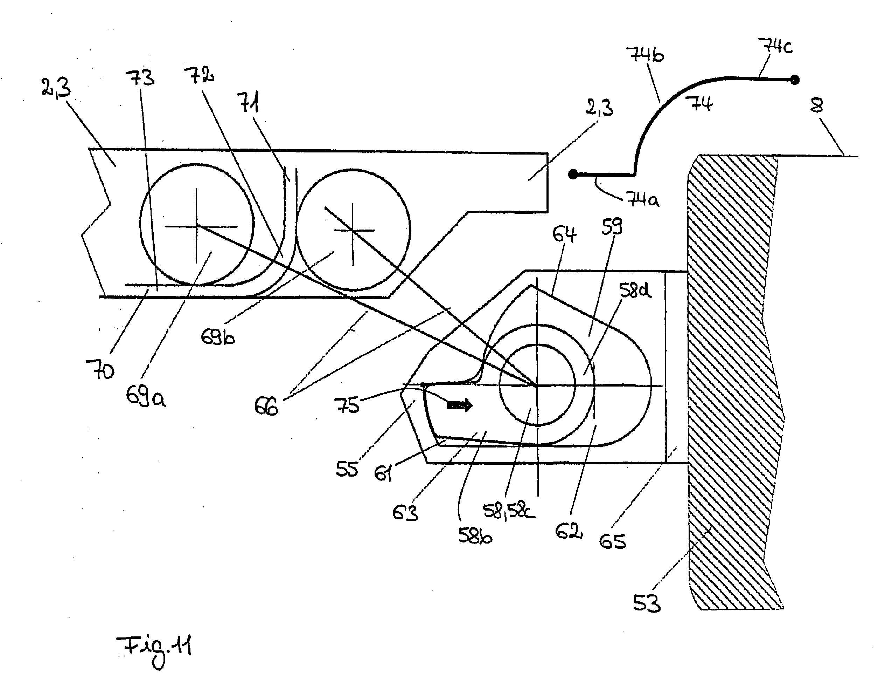

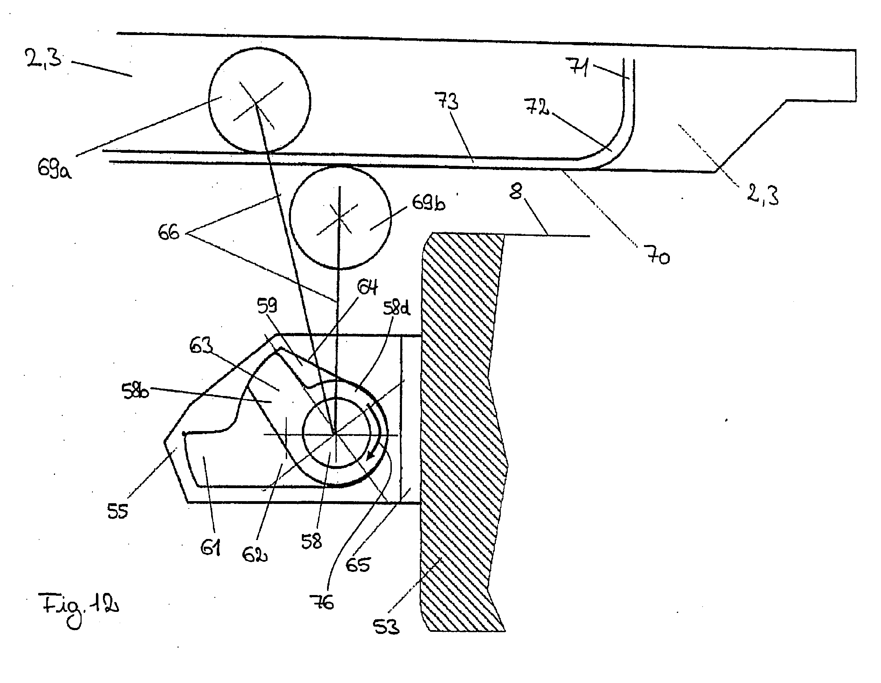

In dem ersten Führungselement 55 ist die in den Figuren 11 und 12 dargestellte erste Kulissenöffnung 59 ausgebildet, die einen Verriegelungsbereich 61 und einen Verschwenkungsbereich 62 aufweist, in welchen der Kulissenschieber 58 verschiebbar und verschwenkbar geführt wird. In die zweite und dritte Kulissenöffnung 60a, 60b, die jeweils in dem zweiten und dritten Führungselement 56 und 57 ausgebildet und von denen exemplarisch in Fig. 8 nur die Kulissenöffnung 60a des zweiten Führungselements 56 dargestellt ist, greifen nachstehend näher beschriebene Führungsabschnitte 58a, 58c des Kulissenschiebers 58 ein, wodurch der Kulissenschieber 58 in Fahrzeuglängsrichtung verschiebbar in der zweiten und dritten Kulissenöffnung 60a, 60b gehalten ist. Diese Längsverschiebung wird dadurch erreicht, dass die Kulissenöffnungen 60a, 60b in Form von Langlöchern geformt sind und die Führungsabschnitte 58a, 58c darin geführte Zylinder ausbilden.

Der in Fig. 7 dargestellte Kulissenschieber 58 ist ein im Wesentlichen zylindrisches Bauteil mit den jeweils an seinen Enden ausgebildeten Führungsabschnitten 58a, 58c und einem dazwischen angeordneten Kulissenschieberabschnitt 58d, der einen größeren Durchmesser als die Führungsabschnitte 58a und 58c und einen seitlich hervorstehenden Verriegelungsabschnitt 58b in Form einer Rastnase 63 aufweist. Die Rastnase 63 ist in der in Fig. 11 dargestellten Verriegelungsposition von erstem Führungselement 55 und Kulissenschieber 58 und somit der Führungs- und Verriegelungsvorrichtung in den Verriegelungsbereich 61 der ersten Kulissenöffnung 59 eingerückt und steht mit dieser in Eingriff. In der in Fig. 12 dargestellten Öffnungsposition eines der beiden Türflügel 2, 3 ist die Rastnase 63 aus dem Verriegelungsbereich 61 der ersten Kulissenöffnung 59 ausgerückt und in dem Verschwenkungsbereich 62 in Richtung zur Fahrzeugaußenseite verschwenkt angeordnet.

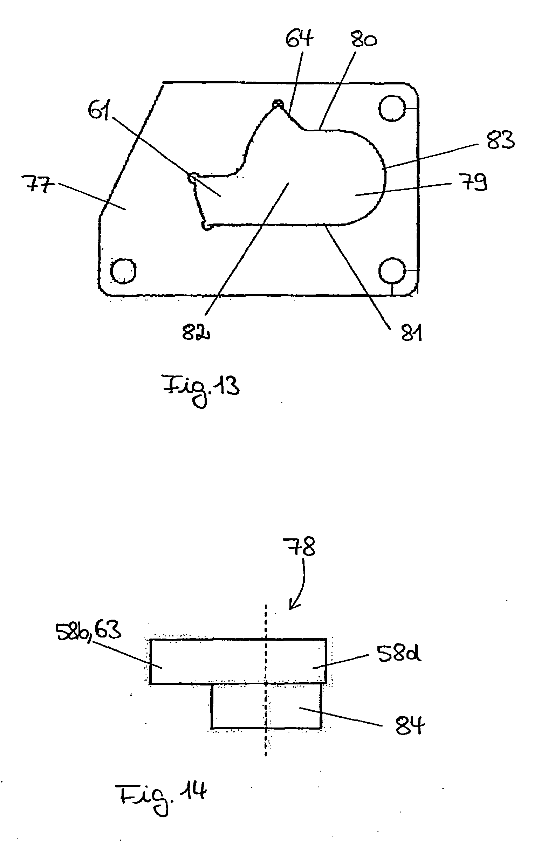

Das zweite und das dritte Führungselement 56, 57 weisen jeweils die zweite und dritte Kulissenöffnung 60a, 60b auf, die in dem Ausführungsbeispiel jeweils als Langloch ausgebildet sind. Die Kulissenöffnungen 60a, 60b dienen der Führung des Kulissenschiebers 58 in Fahrzeuglängsrichtung, wobei die Breite des jeweiligen Langlochs im Wesentlichen dem Durchmesser der Führungsabschnitte 58a, 58c entspricht. In das jeweilige Langloch von zweitem und drittem Führungselement 56 und 57 greift jeweils ein Führungsabschnitt 58a, 58c ein, so dass der Kulissenschieber 58 mit jeweils einem seiner beiden Enden im zweiten und dritten Führungselement 56 und 57 verschiebbar gehalten ist. Anstelle von Langlöchern können die Kulissenöffnungen 60a, 60b auch jeweils als Nut ausgebildet sein, wobei dann das jeweilige Ende des Kulissenschiebers 58 in einer zugeordneten Nut verschiebbar geführt ist. Das dritte Führungselement 57 ist dabei optional und dient nur zur Verstärkung der baulichen Struktur des Führungs- und Verriegelungsteils 52. Es kann folglich auch entfallen, so dass es darüber hinaus auch denkbar ist, das erste und das zweite Führungselement 55 und 56 einstückig auszubilden, um eine Erhöhung der Kompaktheit zu erreichen. Alternativ kann auch der Verschwenkungsbereich 62 der ersten Kulissenöffnung 59 abschnittsweise als Führung des Kulissenschiebers 58 dienen, indem ein Teilabschnitt einer in den Figuren 11 und 12 dargestellten Anschlagkante 64 zu einem Abschnitt eines Langlochs umgeformt wird, in welchem der Kulissenschieberabschnitt 58d geführt wird, so dass auch das zweite Führungselement 56 entfallen kann. Eine solche Ausführungsform ist in den Figuren 13 und 14 dargestellt.

Die Führungselemente 55, 56 und 57 sind über eine Tragplatte 65 an einem die Türflügel 2, 3 seitlich und an ihrer Oberseite umrahmenden Türrahmen 53 angebracht. Es ist dabei ausreichend, wenn zumindest eines der Führungselemente 55, 56 oder 57 drehfest mit einer an dem Türrahmen 53 angeordneten Tragplatte 65 verbunden ist, da die Führungselemente 55, 56 und 57 mittels Verstiftung, Verschraubung, Verschweißung oder dergleichen drehfest miteinander verbunden sind. Die Tragplatte 65 ist ebenfalls ein optionales Bauteil, auf das verzichtet werden kann, wenn zumindest eines der Führungselemente 55, 56 und 57 direkt mit dem Türrahmen 53 drehfest verbunden ist.

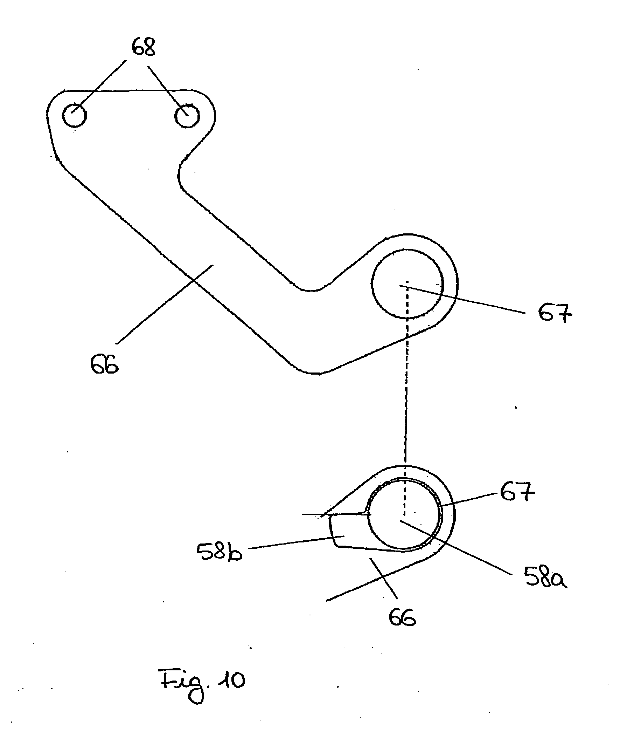

Ein an sich bekannter Schwenkhebel 66 ist schematisch in den Figuren 11 und 12 und detaillierter in Fig. 10 in Aufsicht auf seine Unterseite dargestellt. Er weist an seinem einen Ende eine Montageöffnung 67 auf, in welche im zusammengebauten Zustand der Führungs- und Verriegelungsvorrichtung der Kulissenschieber 58 mit seinem Führungsabschnitt 58a eingreift. Der Führungsabschnitt 58a ist drehfest mit dem Schwenkhebel 66 verbunden. Alternativ kann der Schwenkhebel 66 auch drehfest mit dem Führungsabschnitt 58c verbunden sein. An seinem anderen Ende weist der Schwenkhebel 66 zwei weitere Öffnungen 68 auf, in denen jeweils eine Rolle 69 drehbar gelagert ist, so dass es sich bei dem Schwenkhebel 66 um einen Doppelrollenschwenkhebel handelt. Der Schwenkhebel 66 ist im Ausführungsbeispiel unterhalb des zweiten Führungselements 56 angeordnet, wie dies aus den Figuren 6 und 9 ersichtlich ist. Die beiden drehbar in einer jeweils zugeordneten Öffnung 6B gelagerten Rollen 69a, 69b des in den Figuren 11 und 12 nur schematisch dargestellten Schwenkhebels 66 sind in eine in jedem der Türflügel 2, 3 angeordnete Führungsschiene 70 eingesetzt, die einen Ausrückabschnitt 71, einen gebogenen und abgewinkelten Abschnitt 72 und einen Verschiebeabschnitt 73 umfasst.

Die Funktionsweise der Führungs- und Verriegelungsvorrichtung des Schwenkschiebetürsystems 1 wird nachstehend anhand der Figuren 11 und 12 erläutert. Aus Gründen der Übersichtlichkeit ist in den Figuren 11 und 12 lediglich das erste Führungselement 55 des Führungs- und Verriegelungsteils 52 mit darin angeordnetem Führungsabschnitt 58c und Kulissenschieberabschnitt 58d des Kulissenschiebers 58 dargestellt.

Die Fig. 11 zeigt die Führungs- und Verriegelungsvorrichtung in ihrer Verriegelungsposition bei einem geschlossenen Türflügel 2, 3. In dieser Position befindet sich das Rollenpaar 69a, 69b des Schwenkhebels 66 an seiner Endposition an der Führungsschiene 70, wobei die Rolle 69b an der dem Türrahmen 53 zugewandten Seitenfläche des Ausrückabschnitts 71 anliegt. Die Rastnase63 des Kulissenschiebers 58 ist in den Verriegelungsbereich 61 des ersten Führungselements 55 eingerückt, so dass eine Drehbewegung des Kulissenschiebers 58 und des daran drehfest angebrachten Schwenkhebels 66 nicht möglich ist. Aufgrund der über den Schwenkhebel 66 hergestellten Wirkverbindung zwischen dem Kulissenschieber 58 und dem von der Lagereinheit 9 bewegten Türflügel 2, 3 wird dieser durch den Kulissenschieber 58 in der Verriegelungsposition gehalten und im Bereich des Fahrzeugbodens 54 in seiner Verschlussposition stabilisiert. Senkrecht zur Fahrzeuglängsachse auftretende Kräfte, die bei Druckdifferenzen sowie beim Anstoßen von Fahrgästen an den Türflügel 2, 3 auftreten, können ein Freigeben bzw. ein Ausrücken der Rastnase 63 aus dem Verriegelungsbereich 61 nicht bewirken.

Beim Öffnen und Schließen der Türflügel 2, 3 wird der in Wirkverbindung mit dem Kulissenschieber 58 stehende Türflügel 2, 3 von der Lagereinheit 9 schwenkschiebeartig bewegt. Die von der Lagereinheit 9 bewirkte Bewegung der Türflügel 2, 3 und damit auch eines jeweiligen unteren Abschnitts ist in Fig. 11 durch den Kurvenverlauf 74 angedeutet. Bei der Durchführung einer von der in Fig. 11 dargestellten Verschlussposition eines Türflügels 2 oder 3 ausgehenden Öffnungsbewegung dieses Türflügels 2, 3 wird in einem ersten Schritt der Türflügel 2, 3 von der Lagereinheit 9, wie dies durch den Abschnitt 74a des Kurvenverlaufs 74 angedeutet ist, seitlich parallel zur Fahrzeuglängsachse in Fahrzeuglängsrichtung bewegt. Diese Bewegung wird vom Türflügel 2, 3 auf den Ausrückabschnitt 71 der Führungsschiene 70 übertragen, die dann die daran anliegende Rolle 69b bewegt, welche diese parallel zur Fahrzeuglängsachse verlaufende Bewegung mittels des Schwenkhebels 66 auf den Kulissenschieber 58 überträgt. Hierdurch wird der Verriegelungsabschnitt 58b und damit die Rastnase 63 des drehfest an dem Schwenkhebel 66 angeordneten Kulissenschiebers 58 in Richtung des Pfeils 75 aus dem Verriegelungsbereich 61 heraus verschoben und damit die durch das Führungs- und Verriegelungsteil 52 bewirkte Verriegelungsposition verlassen. Zur Stabilisierung und exakten Führung dieser Bewegung ist der Kulissenschieber 58 dabei in den jeweilig als Langloch ausgebildeten Kulissenöffnungen 60a und 60b von zweitem und drittem Führungselement 56 und 57 geführt. In diesem ersten Schritt der Öffnungsbewegung in Richtung zum Türrahmen 53, d.h. in Fahrzeuglängsrichtung, wird also die Rastnase 63 aus dem Verriegelungsbereich 61 des ersten Führungselements 55 ausgerückt. Damit ist dann die Verriegelung des Kulissenschiebers 58 in dem ersten Führungselement 55 aufgehoben, so dass der Kulissenschieber 58 nun von dem Schwenkhebel 66 im Verschwenkungsbereich 62 in Richtung zur Fahrzeugaußenseite hin verschwenkt werden kann.

Im Anschluss an die das Herausschieben der Rastnase 63 aus dem Verriegelungsbereich 61 bewirkende Ausrückbewegung des Kulissenschiebers 58 wird in einem in Fig. 12 dargestellten zweiten Schritt der Türflügel 2, 3 in einer durch den Abschnitt 74b des Kurvenverlaufs 74 angedeuteten kurven- bzw. bogenförmigen Bewegungsbahn aus der Türöffnung 4 um den Türrahmen 53 herum auf die Fahrzeugaußenseite und vor sowie längs die/der Fahrzeugaußenwand 8 bewegt. Auch diese Bewegung wird wiederum von der Lagereinheit 9 bewirkt und vom Türflügel 2, 3 auf die Führungsschiene 70 und von dort über die daran anliegenden Rollen 69a, 69b auf den mit dem Schwenkhebel 66 drehfest verbundenen Kulissenschieber 58 übertragen. Dieser wird dadurch in Richtung des Pfeils 76 in dem Verschwenkungsbereich 62 in Richtung zur Fahrzeugaußenseite verschwenkt. Dabei liegen der Verriegelungsabschnitt 58b und der Führungsabschnitt 58d am Öffnungsrand des Verschwenkungsbereichs 62 der ersten Kulissenöffnung 59 an und gleiten daran während der Schwenkbewegung des Kulissenschiebers entlang, bis die Rastnase 63 in der Endposition der Schwenkbewegung an einer Anschlagkante 64 des Verschwenkungsbereichs 62 anliegt. Dabei folgen die in der Führungsschiene 70 laufenden Rollen 69a, 69b der kurven- oder bogenförmigen Öffnungs- und Ausschwenkbewegung des Türflügels 2, 3 in dessen unterem Bereich, indem sie sich entlang des Abschnitts 72 in Richtung auf den Verschiebeabschnitt 73 der Führungsschiene 70 zu bewegen.

Wenn die beiden Rollen 69a, 69b das Ende des abgewinkelten und gebogenen Abschnitts 72 erreicht haben, laufen sie dann in einem dritten Schritt entlang des geradlinigen Verschiebeabschnitts 73, wenn der Türflügel 2, 3 entlang der Fahrzeugaußenwand 5 bewegt wird und in seine Offenstellung gelangt, in der die Türöffnung 4 zum Ausstieg/Einstieg von Personen freigegeben ist. Auch diese Bewegung wird von der im oberen Bereich der Türöffnung 4 angeordneten Lagereinheit 9 bewirkt und auf die untere Seite des Türflügels 2, 3 übertragen. Bei ihrer Bewegung längs des Verschiebeabschnitts 73 entsprechend dem Abschnitt 74c des Kurvenverlaufs 74 halten die Rollen 69a, 69b mit Hilfe des festen und steifen Schwenkhebels 66 und aufgrund der den Kulissenschieber 58 in der ersten Kulissenöffnung 59 und in der zweiten und dritten Kulissenöffnung 60a, 60b haltenden Führungs-, Verriegelungs- und Kulissenschieberabschnitte 58a, 58b, 58c und 58d den Türflügel 2, 3 in dem in Fig. 12 gezeigten Abstand zur Fahrzeugaußenwand 8.

Das Schließen des Türflügels 2, 3 erfolgt dann in umgekehrter Reihenfolge der drei vorstehend erläuterten Schritte. Aufgrund der durch die als Antriebseinrichtung ausgebildete Lagereinheit 9 im oberen Bereich der Türöffnung 4 erzeugten seitlichen und bogenförmigen Bewegung des jeweiligen Türflügels 2, 3 laufen die Rollen 69a, 69b entlang des Verschiebeabschnitts 73 in Richtung des gebogenen und abgewinkelten Abschnitts 72 der Führungsschiene 70 und folgen dabei dem Kurvenabschnitt 74b entsprechend der kurvenförmigen Zuschwenkbewegung des jeweiligen Türflügels 2, 3. Diese Zuschwenkbewegung wird über den Schwenkhebel 66 auf den Kulissenschieber 58 übertragen, so dass dieser entgegen dem Uhrzeigersinn und der durch den Pfeil 75 angedeuteten Bewegungsrichtung gedreht wird, bis die Rastnase 63 des Kulissenschiebers 58 den Verriegelungsbereich 61 erreicht und in Richtung des Verriegelungsbereichs 61 des ersten Führungselements 55 weist. Damit ist der Verriegelungsabschnitt 58b vor den Verriegelungsbereich 61 verschwenkt worden. Bei weiterer Bewegung des Türflügels 2, 3 in Fahrzeuglängsrichtung gelangt der Ausrückabschnitt 71 in Anlage an die Rolle 69a, so dass in Folge der weiteren Bewegung in Richtung des Kurvenabschnitts 74a der Schwenkhebel 66 und der an diesem drehfest angebrachte Kulissenschieber 58 senkrecht zum Türrahmen 53 in Fahrzeuglängsrichtung bewegt werden und damit die Rastnase 63 in den Verriegelungsbereich 61 hineingezogen wird, wodurch der Türflügel 2, 3 durch die damit erreichte Verriegelungsposition des Führungs- und Verriegelungsteils 52 blockiert bzw. verriegelt ist.

Eine kompaktere Bauweise der Führungs- und Verriegelungsvorrichtung lässt sich durch Modifizierung des ersten Führungselements 55 und des als Kulissenschieber 58 ausgebildeten Verriegelungselements erzielen. Eine solche Ausführungsform mit modifiziertem ersten Führungselement 77 und modifiziertem Kulissenschieber 78 ist in den Figuren 13 und 14 dargestellt. In dem ersten Führungselement 77 ist eine modifizierte erste Kulissenöffnung 82 ausgebildet, die den Verriegelungsbereich 61 und einen modifizierten Verschwenkungsbereich 79 aufweist. Die im Verschwenkungsbereich 79 ausgebildete Anschlagkante 64 dient abschnittsweise als Führung des modifizierten Kulissenschiebers 78, indem ein Teilabschnitt 80 der Anschlagkante 64 parallel verlaufend zur gegenüberliegenden Kante 81 der Kulissenöffnung 82 ausgebildet ist. Die Verschiebung des Kulissenschiebers 78 in Fahrzeuglängsrichtung beim Öffnungsvorgang wird von einem kreisbogenförmigen Abschnitt 83 begrenzt, der den Teilabschnitt 80 und die dem Teilabschnitt 80 gegenüberliegende Kante 81 miteinander verbindet. Die Breite dieses der Führung in Fahrzeuglängsrichtung dienenden Abschnitts entspricht im Wesentlichen dem Durchmesser des Kulissenschieberabschnitts 58d, so dass der Kulissenschieber 78 innerhalb dieses Abschnitts längsverschiebbar in Fahrzeuglängsrichtung und auch schwenkbar geführt werden kann, sobald die Rastnase 63 des Kulissenschiebers 78 aus dem Verriegelungsbereich 61 des ersten Führungselements 77 ausgerückt ist. Da das erste Führungselement 77 bei dieser Ausführungsform zusätzlich der Führung des Kulissenschiebers 78 dient, sind das zweite und das dritte Führungselement 56, 57 überflüssig und entfallen daher. Somit sind auch die am Kulissenschieber 58 ausgebildeten Führungsabschnitte 58a und 58c nicht mehr notwendig, so dass der modifizierte Kulissenschieber 78 lediglich einen Montageabschnitt 39 aufweist, der in die Montageöffnung 67 des Schwenkhebels 66 derart eingreift, dass der Schwenkhebel 66 und der Kulissenschieber 78 drehfest miteinander verbunden sind. Bis auf den Aspekt, dass der Kulissenschieber 78 jetzt ausschließlich mittels des modifizierten ersten Führungselements 77 geführt wird, ist die Funktionsweise dieses Ausführungsbeispiels unverändert, so dass auf die vorstehend beschriebene Funktionsweise der Führungs- und Verriegelungsvorrichtung verwiesen wird.

## Patentansprüche

1. Schwenkschiebetürsystem (1) eines Fahrzeugs, insbesondere eines Personenbeförderungsfahrzeugs, das zumindest einen an einer horizontalen Tragstange (7) einer Lagereinheit (9) verschiebbar gelagerten Türflügel (2, 3) umfasst, der zum Öffnen aus einer Türöffnung (4) ausfahrbar und in seiner Offenstellung an einer Außenwand (8) des Fahrzeugs längs verschiebbar ist und in Bewegungsumkehr die Türöffnung (4) wieder verschließt,
wobei die Lagereinheit (9) senkrecht zur Verschieberichtung des zumindest einen Türflügels (2, 3) aus- und einfahrbar ist und eine zur Tragstange (7) parallele Riegelwelle (32), die über ein Koppelgetriebe die Lagereinheit (9) aus- und einfährt, und einen elektrischen Getriebemotor (33) aufweist, der mit der Riegelwelle (32) verbunden ist und diese rotatorisch antreibt,
und das eine Führungs- und Verriegelungsvorrichtung aufweist, die einen Schwenkhebel (66) umfasst, der mit seinem einen Ende an dem zugeordneten mindestens einen Türflügel (2, 3) geführt und mit seinem anderen Ende an einem Verriegelungselement befestigt ist, das in einem am Türrahmen (53) und/oder am Fahrzeugboden (54) ortsfest angeordneten Führungs- und Verriegelungsteil (52) verschwenkbar gelagert ist,
**dadurch gekennzeichnet,**
**dass** die Lagereinheit (9) und die Tragstange (7) oberhalb der Türöffnung (4) in den Fahrzeuginnenraum zurückversetzt angeordnet sind und der zumindest eine Türflügel (2, 3) mit der Tragstange (7) über eine winkelförmige Vertikalhalterung (14, 15) verbunden ist und, dass das Führungs- und Verriegelungsteil (52) ein erstes Führungselement (55, 77) mit einer darin ausgebildeten ersten Kulissenöffnung (59, 82) aufweist, in welcher das als Kulissenschieber (58, 78) ausgebildete Verriegelungselement verschiebbar und verschwenkbar geführt ist.

2. Schwenkschiebetürsystem (1) nach Anspruch 1, **dadurch gekennzeichnet, dass** die Tragstange (7) an ihren beiden Endseiten jeweils an einer Seitenwange (10, 11) der Lagereinheit (9) befestigt ist und dass die jeweilige Seitenwange (10, 11) mittels zumindest einer Rolle (23, 24) in einer Führungsschiene (21, 22) verschiebbar gelagert ist.

3. Schwenkschiebetürsystem (1) nach Anspruch 2, **dadurch gekennzeichnet, dass** die jeweilige Führungsschiene (21, 22) quer zur Fahrzeugaußenwand (8) und auf der der Tragstange (7) zugewandten Seite der jeweiligen Seitenwange (10, 11) angrenzend an dieser angeordnet ist.

4. Schwenkschiebetürsystem (1) nach einem der vorhergehenden Ansprüche, **dadurch gekennzeichnet, dass** der zumindest eine Türflügel (2, 3) eine Halterung mit einer als Rohrabschnitt (16, 17) ausgebildeten Kugellängsführung aufweist, wobei die Kugellängsführung an der Tragstange (7) verschiebbar gelagert ist.

5. Schwenkschiebetürsystem (1) nach einem der vorhergehenden Ansprüche, **dadurch gekennzeichnet, dass** die Lagereinheit (9) eine Gewindespindel (27) umfasst, wobei der elektrische Getriebemotor (33) die Gewindespindel (27) und die Lagereinheit (9) über eine mechanische Kopplung (35) antreibt.

6. Schwenkschiebetürsystem (1) nach Anspruch 5, **dadurch gekennzeichnet, dass** die Gewindespindel (27) in den beiden Seitenwangen (10, 11) der Lagereinheit (9) drehbar gelagert ist.

7. Schwenkschiebetürsystem (1) nach einem der vorhergehenden Ansprüche, **dadurch gekennzeichnet, dass** in Schließstellung des zumindest einen Türflügels (2, 3) eine als Biegefeder ausgebildete Rückstellfeder (41) mit einer die Federkraft der Rückstellfeder (41) einstellbaren Korrektureinrichtung die Riegelwelle (32) in einer Totpunktstellung gedrückt hält.

8. Schwenkschiebetürsystem (1) nach einem der vorhergehenden Ansprüche, **dadurch gekennzeichnet, dass** ein an dem zumindest einen Türflügel (2, 3) befestigter Verbindungsflansch (12, 13), die Vertikalhalterung (14, 15), der Rohrabschnitt (16, 17), eine an einem Verbindungsarm (30, 31) angebrachte Spindelmutter (28, 29) und eine Halterung (46, 47) einstückig, vorzugsweise als ein Gussteil, ausgebildet sind.

9. Schwenkschiebetürsystem (1) nach einem der vorhergehenden Ansprüche, **dadurch gekennzeichnet, dass** die erste Kulissenöffnung (59, 82) einen Verriegelungsbereich (61) und der Kulissenschieber (58, 33) einen Verriegelungsabschnitt (58b) aufweist, die in der Verriegelungsposition der Führungs- und Verriegelungsvorrichtung miteinander in Eingriff stehen.

10. Schwenkschiebetürsystem (1) nach Anspruch 9, **dadurch gekennzeichnet, dass** der Schwenkhebel (66) beim Öffnungsvorgang des Türflügels (2, 3) den Verriegelungsabschnitt (58b) des Kulissenschiebers (58, 33) aus dem Verriegelungsbereich (61) der ersten Kulissenöffnung (59, 82) heraus verschiebt oder zieht und relativ zu diesem verschwenkt.

11. Schwenkschiebetürsystem (1) nach Anspruch 9 oder 10, **dadurch gekennzeichnet, dass** der Schwenkhebel (66) beim Schließvorgang des Türflügels (2, 3) den Verriegelungsabschnitt (58b) des Kulissenschiebers (58, 78) vor den Verriegelungsbereich (61) der ersten Kulissenöffnung (59, 82) verschwenkt und dann in diesen hinein zieht oder schiebt.

12. Schwenkschiebetürsystem (1) nach einem der Ansprüche 9 bis 11, **dadurch gekennzeichnet, dass** die erste Kulissenöffnung (59, 82) den Verriegelungsbereich (61) und einen Verschwenkungsbereich (62, 35) aufweist.

13. Schwenkschiebetürsystem (1) nach einem der Ansprüche 9 bis 12, **dadurch gekennzeichnet, dass** das Führungs- und Verriegelungsteil (52) bodenseitig am Türrahmen (53) angeordnet ist.

14. Schwenkschiebetürsystem (1) nach einem der Ansprüche 9 bis 13, **dadurch gekennzeichnet, dass** der Schwenkhebel (66) ein Rollenschwenkhebel, insbesondere ein Doppelrollenschwenkhebel, ist und dass der Schwenkhebel (66) eine in einer türseitigen Führung (70) laufende Rolle (69), vorzugsweise ein darin laufendes Rollenpaar (69a, 69b), aufweist.

15. Personenbeförderungsfahrzeug, das ein Schwenkschiebetürsystem mit zumindest einen an einer horizontalen Tragstange (7) einer Lagereinheit (9) verschiebbar gelagerten Türflügel (2, 3) umfasst, der zum Öffnen aus einer Türöffnung (4) ausfahrbar und in seiner Offenstellung an einer Außenwand (8) des Fahrzeugs längs verschiebbar ist und in Bewegungsumkehr die Türöffnung (4) wieder verschließt,
wobei die Lagereinheit (9) senkrecht zur Verschieberichtung des zumindest einen Türflügels (2, 3) aus- und einfahrbar ist und eine zur Tragstange (7) parallele Riegelwelle (32), die über ein Koppelgetriebe die Lagereinheit (9) aus- und einfährt, und einen elektrischen Getriebemotor (33) aufweist, der mit der Riegelwelle (32) verbunden ist und diese rotatorisch antreibt,
und das eine Führungs- und Verriegelungsvorrichtung aufweist, die einen Schwenkhebel (66) umfasst, der mit seinem einen Ende an dem zugeordneten mindestens einen Türflügel (2, 3) geführt und mit seinem anderen Ende an einem Verriegelungselement befestigt ist, das in einem am Türrahmen (53) und/oder am Fahrzeugboden (54) ortsfest angeordneten Führungs- und Verriegelungsteil (52) verschwenkbar gelagert ist, **dadurch gekennzeichnet, dass** es ein Schwenkschiebetürsystem nach einem der Ansprüche 1 bis 14 aufweist.

## Claims

1. Swinging-sliding door system (1) of a motor vehicle, in particular a passenger service motor vehicle, said system comprising at least one door leaf (2, 3) mounted in a sliding manner on a horizontal support bar (7) of a bearing unit (9), which door leaf is extendable from a door opening (4) for opening and longitudinally slidable in its open position on an outer wall (8) of the motor vehicle and closes the door opening (4) again with a reverse movement, the bearing unit (9) being extendable and retractable perpendicular to the direction of sliding of the at least one door leaf (2, 3) and comprising a lock bolt shaft (32) parallel to the support bar (7), which lock bolt shaft extends and retracts the bearing unit (9) via a linkage, and an electric geared motor (33) connected to the lock bolt shaft (32) and driving this in a rotary manner, and said system comprising a guiding and locking device that has a rocking lever (66) that is guided at one end on the associated at least one door leaf (2, 3) and is fixed at its other end on a locking member that is pivotally mounted in a guiding and locking part (52) arranged immovably on the door frame (53) and/or on the floor (54) of the motor vehicle, **characterised in that** the bearing unit (9) and the support bar (7) are arranged above the door opening (4) set back into the interior of the motor vehicle and the at least one door leaf (2, 3) is connected to the support bar (7) via an angular vertical mount (14, 15), and **in that** the guiding and locking part (52) comprises a first guide member (55, 77) with a first connecting opening (59, 82) formed therein, in which opening the locking member configured as a connecting slider (58, 78) is guided in a sliding and pivoting manner.

2. Swinging-sliding door system (1) according to claim 1, **characterised in that** the support bar (7) is fixed at each of its two ends to a side flange (10, 11) of the bearing unit (9), and **in that** the respective side flange (10, 11) is in a sliding manner mounted in a guide rail (21, 22) by at least one roller (23, 24).

3. Swinging-sliding door system (1) according to claim 2, **characterised in that** the respective guide rail (21, 22) is arranged transverse to the outer wall (8) of the motor vehicle and at the end of the respective side flange (10, 11) facing the support bar (7), adjacent to said side flange.

4. Swinging-sliding door system (1) according to any one of the preceding claims, **characterised in that** the at least one door leaf (2, 3) comprises a mount with a longitudinal ball guide configured as a tube portion (16, 17), the longitudinal ball guide being mounted in a sliding manner at the support bar (7).

5. Swinging-sliding door system (1) according to any one of the preceding claims, **characterised in that** the bearing unit (9) comprises a threaded spindle (27), the electric geared motor (33) driving the threaded spindle (27) and the bearing unit (9) via a mechanical coupling (35).

6. Swinging-sliding door system (1) according to claim 5, **characterised in that** the threaded spindle (27) is rotatably mounted in the two side flanges (10, 11) of the bearing unit (9).

7. Swinging-sliding door system (1) according to any one of the preceding claims, **characterised in that** a return spring (41) configured as a spiral spring presses and holds the lock bolt shaft (32) in a dead centre position with a correction means that can adjust the spring force of the return spring (41) when the at least one door leaf (2, 3) is closed.

8. Swinging-sliding door system (1) according to any one of the preceding claims, **characterised in that** a connecting flange (12, 13) fixed to the at least one door leaf (2, 3), the vertical mount (14, 15), the tube portion (16, 17), a spindle nut (28, 29) attached to a connecting arm (30, 31) and a mount (46, 47) are formed in one piece, preferably as a cast part.

9. Swinging-sliding door system (1) according to any one of the preceding claims, **characterised in that** the first connecting opening (59, 82) comprises a locking region (61) and the connecting slider (58, 33) comprises a locking portion (58b) that engage with one another in the locking position of the guiding and locking device.

10. Swinging-sliding door system (1) according to claim 9, **characterised in that** the rocking lever (66) slides or pulls the locking portion (58b) of the connecting slider (58, 33) out of the locking region (61) of the first connecting opening (59, 82) and pivots said connecting slider relative to this locking region as the door leaf (2, 3) is opened.

11. Swinging-sliding door system (1) according to either claim 9 or claim 10, **characterised in that** the rocking lever (66) pivots the locking portion (58b) of the connecting slider (58, 78) in front of the locking region (61) of the first connecting opening (59, 82) and then pulls or moves said connecting slider into said connecting region as the door leaf (2, 3) is closed.

12. Swinging-sliding door system (1) according to any one of claims 9 to 11, **characterised in that** the first connecting opening (59, 82) comprises the locking region (61) and a pivoting region (62, 35).

13. Swinging-sliding door system (1) according to any one of claims 9 to 12, **characterised in that** the guiding and locking part (52) is arranged on the door frame (53), at the bottom.

14. Swinging-sliding door system (1) according to any one of claims 9 to 13, **characterised in that** the rocking lever (66) is a roller rocking lever, in particular a double roller rocking lever, and **in that** the rocking lever (66) comprises a roller (69) which runs in a door guide (70), preferably a roller pair (69a, 69b) which runs therein.

15. Passenger service motor vehicle that comprises a swinging-sliding door system with at least one door leaf (2, 3) mounted on a sliding manner on a horizontal support bar (7) of a bearing unit (9), which door leaf is extendable from a door opening (4) for opening and longitudinally slidable in its open position on an outer wall (8) of the motor vehicle and closes the door opening (4) again with a reverse movement, the bearing unit (9) being extendable and retractable perpendicular to the direction of sliding of the at least one door leaf (2, 3) and comprising a lock bolt shaft (32) parallel to the support bar (7), which lock bolt shaft extends and retracts the bearing unit (9) via a linkage, and an electric geared motor (3) connected to the lock bolt shaft (32) and drives this in a rotary manner, and said system comprising a guiding and locking device that has a rocking lever (66) that is guided at one end on the associated at least one door leaf (2, 3) and is fixed at its other end to a locking member that is pivotally mounted in a guiding and locking part (52) arranged immovably on the door frame (53) and/or on the floor (54) of the motor vehicle, **characterised in that** it comprises a swinging-sliding door system according to any one of claims 1 to 14.

## Revendications

1. Système de portière coulissante pivotante (1) pour un véhicule, en particulier un véhicule de transport de personnes, comprenant au moins un battant (2, 3) monté de manière à pouvoir coulisser sur une barre d'appui (7) horizontale d'une unité de palier (9), lequel peut être sorti d'une baie (4) pour l'ouverture et qui dans sa position d'ouverture peut coulisser longitudinalement contre une paroi extérieure (8) du véhicule, et qui referme la baie (4) par mouvement inverse,
l'unité de palier (9) pouvant être rentrée et sortie perpendiculairement à la direction de déplacement du ou des battants (2, 3) et comportant un arbre de verrouillage (32) parallèle à la barre d'appui (7), lequel sort et rentre l'unité de palier (9) au moyen d'une commande articulée, et un moto-réducteur électrique (33) relié à l'arbre de verrouillage (32) et entraînant celui-ci en rotation,
et comportant un dispositif de guidage et de verrouillage comprenant un levier oscillant (66) guidé par sa première extrémité contre le ou les battants (2, 3) correspondants et fixé par son autre extrémité sur un élément de verrouillage monté de manière à pouvoir pivoter dans une pièce de guidage et de verrouillage (52) fixement disposée sur le cadre de porte (53) et/ou sur le plancher du véhicule (54),
**caractérisé en ce que**
l'unité de palier (9) et la barre d'appui (7) sont disposées en retrait au-dessus de la baie (4) à l'intérieur du véhicule, **en ce que** le ou les battants (2, 3) sont rattachés à la barre d'appui (7) par un support vertical en forme d'équerre (14, 15), et **en ce que** la pièce de guidage et de verrouillage (52) comporte un premier élément de guidage (55, 77) avec une première ouverture de coulisse (59, 82) prévue à l'intérieur de celui-ci où l'élément de verrouillage réalisé comme tiroir coulissant (58, 78) est guidé de manière à pouvoir coulisser et pivoter.

2. Système de portière coulissante pivotante (1) selon la revendication 1, **caractérisé en ce que** la barre d'appui (7) est fixée sur chacun de ses deux côtés d'extrémité contre une joue latérale (10, 11) correspondante de l'unité de palier (9), et **en ce que** chaque joue latérale (10, 11) est montée de manière à pouvoir coulisser dans un rail de guidage (21, 22) au moyen d'au moins un galet (23, 24).

3. Système de portière coulissante pivotante (1) selon la revendication 2, **caractérisé en ce que** chaque rail de guidage (21, 22) est disposé transversalement à la paroi extérieure de véhicule (8) et est adjacent à la joue latérale (10, 11) correspondante sur le côté de celle-ci qui est orienté vers la barre d'appui (7).

4. Système de portière coulissante pivotante (1) selon l'une des revendications précédentes, **caractérisé en ce que** le ou les battants (2, 3) comportent un support avec un guidage par billes réalisé comme partie de tube (16, 17), le guidage par billes étant monté de manière à pouvoir coulisser sur la barre d'appui (7).

5. Système de portière coulissante pivotante (1) selon l'une des revendications précédentes, **caractérisé en ce que** l'unité de palier (9) comprend une vis filetée (27), le moto-réducteur électrique (33) entraînant la vis filetée (27) et l'unité de palier (9) au moyen d'un accouplement mécanique (35).

6. Système de portière coulissante pivotante (1) selon la revendication 5, **caractérisé en ce que** la vis filetée (27) est montée de manière à pouvoir tourner dans les deux joues latérales (10, 11) de l'unité de palier (9).

7. Système de portière coulissante pivotante (1) selon l'une des revendications précédentes, **caractérisé en ce qu'**en position de fermeture du ou des battants (2, 3), un ressort de rappel (41) réalisé comme ressort de flexion maintient avec un dispositif correcteur ajustant la force du ressort de rappel (41) l'arbre de verrouillage (32) serré dans une position de point mort.

8. Système de portière coulissante pivotante (1) selon l'une des revendications précédentes, **caractérisé en ce qu'**une bride de raccord (12, 13) fixée contre le ou les battants (2, 3), le support vertical (14, 15), la partie de tube (16, 17), un écrou de tige filetée (28, 29) monté sur un bras de liaison (30, 31) et un support (46, 47) sont réalisés d'un seul tenant, de préférence comme une seule pièce moulée.

9. Système de portière coulissante pivotante (1) selon l'une des revendications précédentes, **caractérisé en ce que** la première ouverture de coulisse (59, 82) présente une zone de verrouillage (61) et le tiroir coulissant (58, 33) une partie de verrouillage (58b), lesquelles sont en prise mutuelle en position de verrouillage du dispositif de guidage et de verrouillage.

10. Système de portière coulissante pivotante (1) selon la revendication 9, **caractérisé en ce qu'**à l'ouverture du battant (2, 3), le levier oscillant (66) dégage ou tire la partie de verrouillage (58b) du tiroir coulissant (58, 33) hors de la zone de verrouillage (61) de la première ouverture de coulisse (59, 82), et la pivote par rapport à celle-ci.

11. Système de portière coulissante pivotante (1) selon la revendication 9 ou la revendication 10, **caractérisé en ce qu'**à la fermeture du battant (2, 3), le levier oscillant (66) pivote la partie de verrouillage (58b) du tiroir coulissant (58, 78) devant la zone de verrouillage (61) de la première ouverture de coulisse (59, 82) avant de la tirer ou de la pousser dans celle-ci.

12. Système de portière coulissante pivotante (1) selon l'une des revendications 9 à 11, **caractérisé en ce que** la première ouverture de coulisse (59, 82) comprend la zone de verrouillage (61) et une zone de pivotement (62, 35).

13. Système de portière coulissante pivotante (1) selon l'une des revendications 9 à 12, **caractérisé en ce que** la pièce de guidage et de verrouillage (52) est disposée sur le cadre de porte (53) côté plancher.

14. Système de portière coulissante pivotante (1) selon l'une des revendications 9 à 13, **caractérisé en ce que** le levier oscillant (66) est un levier oscillant à galet, en particulier un levier oscillant à galet double, et **en ce que** le levier oscillant (66) comporte un galet (69) mobile dans une glissière (70) côté porte, de préférence une paire de galets (69a, 69b), mobiles à l'intérieur de celle-ci.

15. Véhicule de transport de personnes, comprenant un système de portière coulissante pivotante avec au moins un battant (2, 3) monté de manière à pouvoir coulisser sur une barre d'appui (7) horizontale d'une unité de palier (9), lequel peut être sorti d'une baie (4) pour l'ouverture et qui dans sa position d'ouverture peut coulisser longitudinalement contre une paroi extérieure (8) du véhicule, et qui referme la baie (4) par mouvement inverse,
l'unité de palier (9) pouvant être rentrée et sortie perpendiculairement à la direction de déplacement du ou des battants (2, 3) et comportant un arbre de verrouillage (32) parallèle à la barre d'appui (7), lequel sort et rentre l'unité de palier (9) au moyen d'une commande articulée, et un moto-réducteur électrique (33) relié à l'arbre de verrouillage (32) et entraînant celui-ci en rotation,
et comportant un dispositif de guidage et de verrouillage comprenant un levier oscillant (66) guidé par sa première extrémité contre le ou les battants (2, 3) correspondants et fixé par son autre extrémité sur un élément de verrouillage monté de manière à pouvoir pivoter dans une pièce de guidage et de verrouillage (52) fixement disposée sur le cadre de porte (53) et/ou sur le plancher du véhicule (54), **caractérisé en ce que** ledit véhicule comporte un système de portière coulissante pivotante selon l'une des revendications 1 à 14.
